# EUROPEAN PATENT SPECIFICATION

(11) **EP 2 802 926 B1**
(45) Date of publication and mention of the grant of the patent: **04.04.2018**
(21) Application number: 12813015.0
(22) Date of filing: 21.12.2012
(51) Int. Cl.: G02B 27/22

(54) **LENTICULAR MEANS FOR AN AUTOSTEREOSCOPIC DISPLAY APPARATUS HAVING AN ELECTRO-OPTIC AND AN ORIENTATION LAYER AND METHOD OF MANUFACTURING THE SAME**
LINSENFÖRMIGE AUTOSTEREOSKOPISCHE ANZEIGEVORRICHTUNG MIT ELEKTRO-OPTISCHEN UND DREH- SCHICHTEN UND HERSTELLUNGSVERFAHREN DAFÜR
SYSTÈME D'AFFICHAGE LENTICULAIRE DU TYPE AUTO-STÉRÉOSCOPIQUE AYANT UNE COUCHE ÉLECTRO-OPTIQUE AVEC UNE COUCHE D'ORIENTATION ET MÉTHOD DE FABRICATION DUDIT SYSTÈME

(30) Priority: 13.01.2012 EP 12151027
(43) Date of publication of application: 19.11.2014
(73) Proprietor: Ultra-D Coöperatief U.A., 5657 HJ Eindhoven (NL)
(72) Inventor: ZUIDEMA, Hans, NL-5629 ME Eindhoven (NL)
(74) Representative: DeltaPatents B.V.
(86) International application number: PCT/EP2012/076756
(87) International publication number: WO 2013/104519

(56) References cited:
- WO-A1-2010/109396
- US-A1- 2009 033 812
- BERKEL VAN C ET AL: "MULTIVIEW 3D-LCD", PROCEEDINGS OF SPIE, S P I E - INTERNATIONAL SOCIETY FOR OPTICAL ENGINEERING, US, vol. 2653, 1 January 1996 (1996-01-01), pages 32-39, XP000646419, ISSN: 0277-786X, DOI: 10.1117/12.237437

## Description

### FIELD OF THE INVENTION:

The invention relates to lenticular means for an autostereoscopic display apparatus comprising a display panel for providing a display output composed of pixels in an array, wherein the lenticular means are arranged at a display side of the display panel, wherein the display apparatus is switchable between a 2D and 3D operational mode. The invention also relates to such autostereoscopic display apparatus as such. The invention further relates to an electronic device comprising such display apparatus. The invention also relates to a method of manufacturing such display apparatus.

### BACKGROUND OF THE INVENTION:

Autostereoscopic display apparatus are known. Examples of such autostereoscopic display apparatus are described in the paper by C. van Berkel et al entitled "Multiview 3D - LCD" published in SPIE Proceedings Vol. 2653, 1996, pages 32 to 39 and in GB-A-2196166. In these examples the display device comprises a matrix LC (liquid crystal) display panel which has rows and columns of pixels (display elements) and which acts as a spatial light modulator to modulate light directed therethrough from a light source. The display panel can be of the kind used in other display applications, for example computer display screens for presenting display information in two dimensional form. A lenticular sheet, for example in the form of a molded or machined sheet of polymer material, overlies the output side of the display panel with its lenticular elements, comprising (semi) cylindrical lens elements, extending in the column direction with each lenticular element being associated with a respective group of two, or more, adjacent columns of display elements and extending in a plane that runs parallel with the display element columns. In an arrangement in which each lenticule is associated with two columns of display elements, the display panel is driven to display a composite image comprising two 2D sub-images vertically interleaved, with alternate columns of display elements displaying the two images, and the display elements in each column providing a vertical slice of the respective 2D (sub) image. The lenticular sheet directs these two slices, and corresponding slices from the display element columns associated with the other lenticules, to the left and right eyes respectively of a viewer in front of the sheet so that, with the sub-images having appropriate binocular disparity, the viewer perceives a single stereoscopic image. In other, multi-view, arrangements, in which each lenticule is associated with a group of more than two adjacent display elements in the row direction and corresponding columns of display elements in each group are arranged appropriately to provide a vertical slice from a respective 2-D (sub-) image, then as a viewer's head moves a series of successive, different, stereoscopic views are perceived for creating, for example, a look-around impression. In view of the need for the lenticular elements to be accurately aligned with the display pixels, it is customary for the lenticular screen to be mounted over the display panel in a permanent manner so that the position of the lenticular elements is fixed in relation to the array of pixels.

Autostereoscopic display apparatus of this kind can be used for various applications, for example in medical imaging, virtual reality, games and CAD fields.

Further developments of autostereoscopic display apparatus consist of making the apparatus such that it is switchable between 2D and 3D operational modes. In such autostereoscopic display apparatus the lenticular means comprises electro-optic material whose refractive index is switchable by selective application of an electrical potential thereto between a first value whereby the light output directing action of the lenticular means is provided and a second value whereby the light output directing action is removed. By switching the electro-optic material, therefore, the lens action of the lenticular means can be cancelled. In effect, the lenticular means can be switched "on" and "off'. In one setting, the "on" mode, the lenticular means is operable to perform a lens action in the usual manner to direct the light outputs from groups of sub-pixels appropriately and enable a stereoscopic image to be perceived when suitable stereoscopic sub-images are displayed on the image display device. In the other setting, the "off" mode, this lens action is removed and the lenticular means behaves like a simple sheet of transparent material thereby allowing the same display information to be received by both eyes of a viewer as in the case of a conventional two-dimensional display. This enables high resolution two dimensional display information to be viewed utilizing for the display the full available horizontal and vertical resolution of the display device, as determined by the pixel columns and rows. Thus, the apparatus can be used for 3-D stereoscopic displays and conventional 2-D displays of native resolution, merely by switching the lenticular means between these two modes. This kind of autostereoscopic display apparatus thus offers the significant advantage of enabling the same display apparatus to be used for both high resolution 2-D and 3-D display purposes. When used as, for example, a computer display screen, a user can simply switch between the 3-D display mode for stereoscopic images and the native resolution 2-D display mode for text processing or the like as and when required.

A drawback of the known 2D/3D switchable autostereoscopic display apparatus is that it is not suitable for mass production in an economical feasible manner. Conventionally, such display apparatus uses liquid crystal technology in the lenticular means. The stack-ups used in such technology are complex and require processing steps, which are not suitable for mass production purpose.

### SUMMARY OF THE INVENTION:

It is an object of the invention to provide an autostereoscopic display apparatus, which is more suitable for mass production.

The invention is defined by the independent claims. The dependent claims define advantageous embodiments.

According to a first aspect of the invention the object is achieved with lenticular means as claimed in claim 1.

An effect of the lenticular means for a display apparatus according to the invention is as follows. The lenticular means of the invention comprises similar layers as the known autostereoscopic display apparatus, such as the lenticular sheet comprising the profiled surface at the lenticular side thereof, wherein the profiled surface defines an array of lenticular elements for directing the outputs from respective groups of said pixels in mutually different directions so as to enable a stereoscopic image to be perceived. Furthermore, the lenticular sheet has a first refractive index. The lenticular means of the autostereoscopic display apparatus of the invention further comprises an electro-optic material comprising functional molecules. The electro-optic material having a second refractive index and being arranged with a first side at the lenticular side on the profiled surface of the lenticular sheet. The second refractive index of the electro-optic material is switchable by selective application of an electrical potential thereto between a first value, whereby the second refractive index of the electro-optic material is substantially the same as that of the lenticular sheet, and a second value, whereby the refractive index of the electro-optic material is different from the first refractive index. And, the lenticular means of the autostereoscopic display apparatus of the invention comprises a first orientation layer abutting the electro-optic material at a second side for forcing an orientation of the functional molecules near the interface between the electro-optic material and the first orientation layer, the second side facing away from the lenticular sheet.

In the invention the addition of the first transparent carrier foil, which optically does not play a role in the display functionality, opens up a wide variety of options in the manufacturing process. Respective layers of the layer stack may be provided on the transparent carrier foil first using conventional deposition techniques such as coating, spraying, etc., in a reel-to-reel process, before they are added to the stack of the lenticular means being formed. Furthermore, the addition of the transparent carrier foil to the stack of the lenticular means may also be carried out in a reel-to-reel process, provided that all layers that are merged are as such suitable for reel-to-reel processing. This typically excludes the addition of layers to a thick non-foldable glass substrate. Expressed differently, the transparent carrier foil that is added to the stack of the lenticular means being formed is as such suitable (by choosing the right material and thickness) for reel-to-reel processing. The combination of both aspects renders the process suitable for mass-production in an economical feasible manner. Reel-to-reel processing as such is well-known to the person skilled in the art. Reel-to-reel/roll-to-roll/real-to-real (covered with the term R2R) processing as such is well-known to the person skilled in the art.

The inventors have realized that the conventional layer stack in the lenticular means of an autostereoscopic display apparatus causes problems, when aiming for mass production of the display apparatus. In particular the provision of the layers neighboring to and/or interacting with the electro-optic material (for example a liquid crystal material) render the conventional processing complex and not suitable for mass-production.

Such "problem"-layers include the orientation layers (for example the polyimide layers in a lenticular stack), which is required for forcing an orientation of the liquid crystal molecules in the liquid crystal material near the interface between the liquid crystal material and the first orientation layer. A drawback of the orientation layer (such as polyimide layer) is that it requires rubbing after it is added to the stack. Rubbing of the polyimide layer involves a mechanical and delicate step. By providing the polyimide layer on a transparent carrier foil first, renders the rubbing easier to carry out and, moreover, such rubbing can be done in reel-to-reel process facilitating mass-production. Rubbing of polyimide layer as such is well known to the person skilled in the art.

Moreover, in embodiments of the display apparatus of the invention such "problem" layers may also include the lenticular sheet itself (later in this description there is discussed an advantageous embodiment, wherein there is no orientation layer at all between the lenticular sheet and the electro-optic material).

The wording "being arranged at a respective side" must be interpreted such that the option is included that there may be other layers in between said respective layers, such as the first orientation layer (or a further orientation layer), in between the electro-optic material and the lenticular sheet.

Furthermore, the wording "provided on the first transparent carrier foil" is to be interpreted, such that the display apparatus of the invention includes the option that there may be other layers, such as a first electrode layer in between the first transparent carrier foil and the first orientation layer.

Where the feature "orientation layer" is used in this description, this must be interpreted as a layer suitable for fixing the orientation of molecules (for example liquid crystal molecules) in the electro-optic material. In case this orientation layer comprises polyimide, this implies that the layer has been rubbed (for example with a rubbing cloth). Rubbing of polyimide layers for an LCD display is a process, which is well known as such.

Where in this description the wording "first one" is used in relation with a selection from a number of options, this must be interpreted as selecting one from the number of options.

Where in this description the wording "second one" is used in relation with a selection from a number of options, this must be interpreted as a different one than the first one.

An embodiment of the autostereoscopic display apparatus of the invention further comprises a second transparent carrier foil being suitable for reel-to-reel processing. Furthermore in this embodiment, a second one of the lenticular sheet and the first orientation layer is provided on the second transparent carrier foil. This embodiment is advantageous, because the more problem layers are tackled in accordance with the invention (which means that these layers are provided on a respective transparent carrier foil, before they are applied to the stack of the lenticular means), the more suitable the display apparatus becomes for mass production in an economical feasible manner.

In an embodiment of the autostereoscopic display apparatus of the invention wherein the lenticular sheet is directly provided on the electro-optic material, and wherein the lenticular side of the lenticular sheet has been modified for functioning as orientation layer for the electro-optic material. One way of adapting the lenticular sheet is by rubbing a surface of the lenticular sheet. This is an advantageous embodiment, because one of the orientation layers can be totally dispensed with, which renders the method of manufacturing of the device less complex and costly. The inventors have discovered that it is possible to modify the lenticular side of the lenticular sheet such that it takes over the function of the orientation layer. This may be done by rubbing the surface of the lenticular sheet the same way as it is done for the orientation layer.

An embodiment of the autostereoscopic display apparatus of the invention further comprises a second orientation layer in between the lenticular sheet and the electro-optic material. This embodiment constitutes a variant on the previously mentioned embodiment. The addition of a second orientation layer in between the lenticular sheet and the electro-optic material renders the layer structure more similar to that of the known display apparatus (it must be noted that in the layer stack of the known display apparatus there is no transparent carrier foil).

An embodiment of the autostereoscopic display apparatus of the invention further comprises a first electrode layer provided at the first side of the electro-optic material, and a second electrode layer provided at a second side of the electro-optic material, wherein the second side is opposite to the first side, wherein the first electrode layer and the second electrode layer are configured for applying said electrical potential.

In an embodiment of the autostereoscopic display apparatus of the invention a first one of the first electrode layer and the second electrode layer has been provided on the first transparent carrier foil. The first electrode layer may be advantageously provided on the first transparent carrier foil, for example between the first transparent carrier foil and the lenticular sheet (in case the first transparent carrier foil is provided at the first side of the electro-optic material), or, between the first transparent carrier foil and the first orientation layer (in case the first transparent carrier foil is provided at the second side, opposite to the first side, of the electro-optic material).

In an embodiment of the autostereoscopic display apparatus of the invention a second one of the first electrode layer and the second electrode layer is provided on the second transparent carrier foil. The second electrode layer may be advantageously provided on the second transparent carrier foil, for example between the second transparent carrier foil and the lenticular sheet (in case the second transparent carrier foil is provided at the first side of the electro-optic material), or, between the second transparent carrier foil and the respective orientation layer (in case the second transparent carrier foil is provided at the second side, opposite to the first side, of the electro-optic material).

In an embodiment of the autostereoscopic display apparatus of the invention the display panel comprises one of a group comprising: an LED panel, an LCD panel, and a plasma panel. Despite the fact that embodiments of the invention use liquid crystal technology in the lenticular means, the invention is not limited to LCD panels per se. Any kind of display panel having an array of pixels is suitable for producing an image comprising two or more interleaved sub-images to enable a stereoscopic image to be perceived.
- In an embodiment of the autostereoscopic display apparatus of the invention said first transparent carrier foil comprises polymer material.
- In an embodiment of the autostereoscopic display apparatus of the invention said second transparent carrier foil comprises polymer material.
- In an embodiment of the autostereoscopic display apparatus of the invention said electro-optic material comprises a liquid crystal material.
- In an embodiment of the autostereoscopic display apparatus of the invention said first orientation layer comprise polyimide (PI) material.
- In an embodiment of the autostereoscopic display apparatus of the invention said second orientation layer comprise polyimide (PI) material.
- In an embodiment of the autostereoscopic display apparatus of the invention said electrode layers comprise indium-titanium-oxide (ITO) material or carbon nanotubes, or other transparent conductive layers.

According to a second aspect of the invention the object is achieved with an autostereoscopic display apparatus as claimed in claim 9, comprising the lenticular means of the invention. The invention may be sold as an add-on to existing display panels, or as is the case for this embodiment, as a combination of the lenticular means and the display panel.

According to a third aspect of the invention the object is achieved with an electronic device as claimed in claim 10, comprising the autostereoscopic display apparatus of the invention. The invention may be advantageously applied in such electronic devices in the application areas of hand-held devices (such as smart phones, PDA's, laptops, tablet PC's), medical imaging, virtual reality, games and CAD fields.

According to a fourth aspect of the invention the object is achieved with method of manufacturing a display apparatus as claimed in claim 11. As already explained earlier the invention aims at providing an autostereoscopic display apparatus, which is suitable for mass production. To this end the lenticular means in the display apparatus are modified by providing a respective functional layer in the form of respective sub-stack comprising said respective functional layer provided on a respective transparent carrier foil, which is suitable for reel-to-reel processing. In other words the respective functional layer is first provided on the respective transparent carrier foil, whereafter the resulting sub-stack is added to the intermediate stack of the lenticular means.

In an embodiment of method in accordance with the invention, the method further comprises: i) providing a second sub-stack of layers, comprising a second transparent carrier foil being suitable for reel-to-reel processing, and a second one of the lenticular sheet and the first orientation layer provided on the second transparent carrier foil, and ii) adding the second sub-stack to the intermediate layer stack of the lenticular means. In this embodiment the principle of the invention is repeated for a further layer in the stack, which renders the method more suitable for being carried out in a reel-to-reel process, which renders the method more suitable for mass-production.

In an embodiment of the method in accordance with the invention the forming of the first sub-stack of layers is done in a reel-to-reel process. The advantage of this embodiment is that the method is more suitable for mass production in an economical feasible manner.

In an embodiment of the method in accordance with the invention the forming of the second sub-stack of layers is done in a reel-to-reel process.

In an embodiment of the method in accordance with the invention the adding of the first sub-stack of layers is done in a reel-to-reel process.

In an embodiment of the method in accordance with the invention the adding of the second sub-stack of layers is done in a reel-to-reel process.

### BRIEF DESCRIPTION OF THE DRAWINGS:

These and other aspects of the invention are apparent from and will be elucidated with reference to the embodiments described hereinafter.

In the drawings:
Fig. 1 shows a stack-up for an autostereoscopic display apparatus in accordance with an embodiment of the invention;
Figs. 2a to 2f show different stages in a manufacturing method of the apparatus of Fig. 1;
Fig. 3 shows a stack-up for an autostereoscopic display apparatus in accordance with another embodiment of the invention, and
Fig. 4 shows a stack-up for an autostereoscopic display apparatus in accordance with another embodiment of the invention.

### List of reference numerals:

LM lenticular means
DS display panel side
VS viewing side
10 base plate (i.e. glass)
20 optical alignment foil, first sub-stack
24 (pressure-sensitive) adhesive layer
25 transparent carrier foil (i.e. first transparent carrier foil)
26 first (transparent) electrode layer (i.e. ITO)
27 first orientation layer (i.e. polyimide)
30 electro-optic material (i.e. liquid crystal layer) 35 lenticular sheet (replica)
36 lenticular elements
37 further alignment layer provided between lenticular sheet and electro-optic material
40 replica alignment foil, second sub-stack
44 further (pressure-sensitive) adhesive layer
45 further transparent carrier foil (i.e. second transparent carrier foil)
46 second (transparent) electrode layer provided on the transparent carrier foil (i.e. ITO)
PSF profiled surface of lenticular sheet
LS lenticular side (side of lenticular sheet having profiled surface PSF)
S1 first side (side of electro-optic material 30 facing the lenticular sheet)
S2 second side (side of electro-optic material 30 facing away from lenticular sheet)
50 top plate (i.e. glass)
56 second (transparent) electrode layer provided on the top glass plate (i.e. ITO)
58 anti-glare coating
60 edge seal of lenticular means
65 all-around cavity which is filled with liquid crystal fluid
70 electrical connections between electrode layers and driver circuitry
Drv driver circuitry
V potential applied to electrode layers for switching the electro-optic material

### DETAILED DESCRIPTION OF EMBODIMENTS:

The invention relates to an autostereoscopic display apparatus, which is suitable for mass production. In contrast, the known autostereoscopic display apparatus is not suitable for mass production, due to the fact that, until today, certain layers in the layer stack cannot be provided in an easy manner, such as the layers which interact with the electro-optic layer (such as a liquid crystal layer). One example of such layer is the orientation layer (conventionally made of polyimide) which is provided for forcing an orientation of the molecules in the electro-optic layer near the interface with the orientation layer. In an advantageous embodiment of the invention such layer may also be the lenticular sheet as will be illustrated in the drawings and the corresponding description. In the invention the lenticular means in the display apparatus are modified by providing a respective functional layer in the form of respective sub-stack comprising said respective functional layer provided on a respective transparent carrier foil, which is suitable for reel-to-reel processing. In other words the respective functional layer is first provided on the respective transparent carrier foil, whereafter the resulting sub-stack is added to the intermediate stack of the lenticular means.

In the discussion of the detailed embodiments only a limited number of example embodiments are given in order to facilitate the understanding of the invention. Variations on these example embodiments are presented in words at locations where this is considered to be expedient for the understanding of the invention. The nature of the invention renders all discussion with respect to the optical and electrical functioning of 2D/3D switchable displays superfluous. Reference is made to the prior art, wherein all such details are well explained, such as US 2009/0033812 A1.

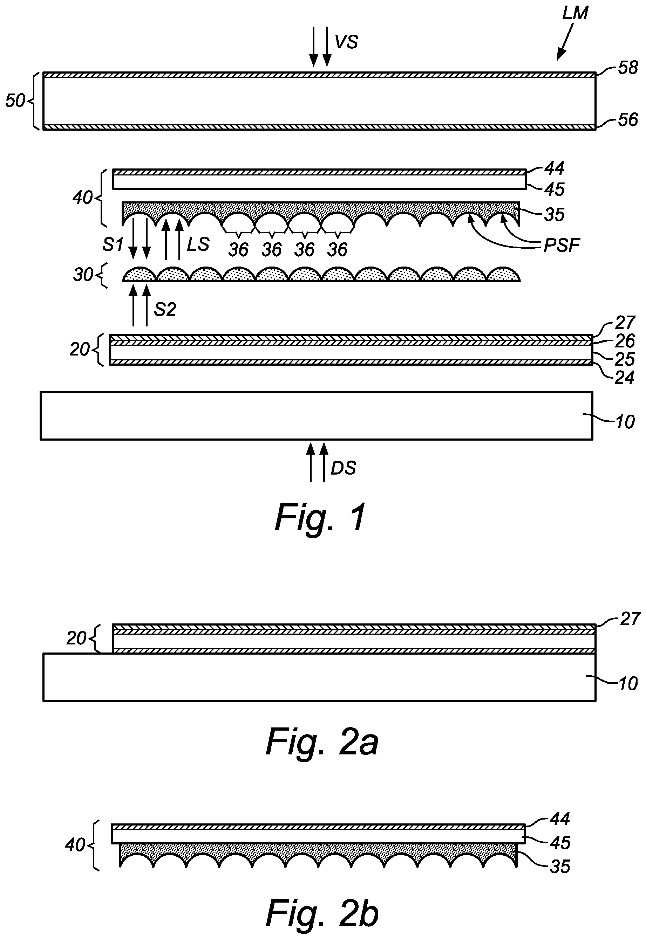

Fig. 1 shows a stack-up for an autostereoscopic display apparatus in accordance with an embodiment of the invention. What is shown in this figure may be considered as the lenticular means LM to be provided on a display panel (not shown). The lenticular means LM comprise a base plate 10, which is generally made of glass. In the autostereoscopic display apparatus of the invention the side at which the base plate 10 is located, is the display panel side DS of the lenticular means LM. The display panel side DS is the side opposite to the viewing side VS, i.e. the side from which a user is viewing the display apparatus in operational use. In the display apparatus the base plate 10 forms a substrate of the stack-up and provides mechanical robustness to it. Moreover, the base plate 10 acts as a spacer plate to ensure proper focus of the lenticular means LM to the display panel. Also, the base plate 10 stabilizes the switchable cell (which is the empty switchable lenticular, i.e. without the electro-optical material) from the panel side DS. In an embodiment the base plate 10 comprise glass with a thickness of 0.4 mm or 0.7 mm for example.

The stack-up of the lenticular means in Fig. 1 further comprises an optical alignment foil 20. This optical alignment foil 20 comprises a sub-stack of different layers. The basis of the sub-stack is a transparent carrier foil 25. On a back-side of the foil 25 there is provided a pressure-sensitive adhesive layer 24 (PSA), which may have a thickness of 25µm for example. On a front-side of the foil 25 there is provided a first transparent electrode layer 26, covered with a first orientation layer 27. The electrode layer 26 may comprises indium-titanium-oxide (ITO) and the orientation layer 27 may comprise polyimide (PI). In an embodiment the total thickness of the electrode layer 26 and the first orientation layer 27 is 10µm (both layers having thickness of about 5µm. The foil 25 may comprise material such as TAC/CTA (cellulose triacetate) and may have a thickness in the range from 100µm to 200µm. A distinct advantage of the sub-stack of this optical alignment foil 20 is that it may be made in a reel-to-reel process, using existing coating or spraying techniques.

As will be understood by those skilled in the art, the optical polarization direction of the optical alignment foil 20 should match the optical polarization direction of the light emitted by the display panel, but also the optical polarization direction of the orientation layer 27. There are multiple options for the foil. First, it may have no birefringement effect in case the polarization directions of the light emitted from the display panel matches that of the orientation layer 27. Alternatively, it may be intentionally designed with a birefringement effect such that a difference in polarization direction between the panel and the orientation layer 27 is compensated for.

The orientation layer 27 must be rubbed in order to ensure that it obtains its orientation function for the electro-optic material with which it is in contact with. Rubbing of the orientation layer as such is well known to the person skilled in the art.

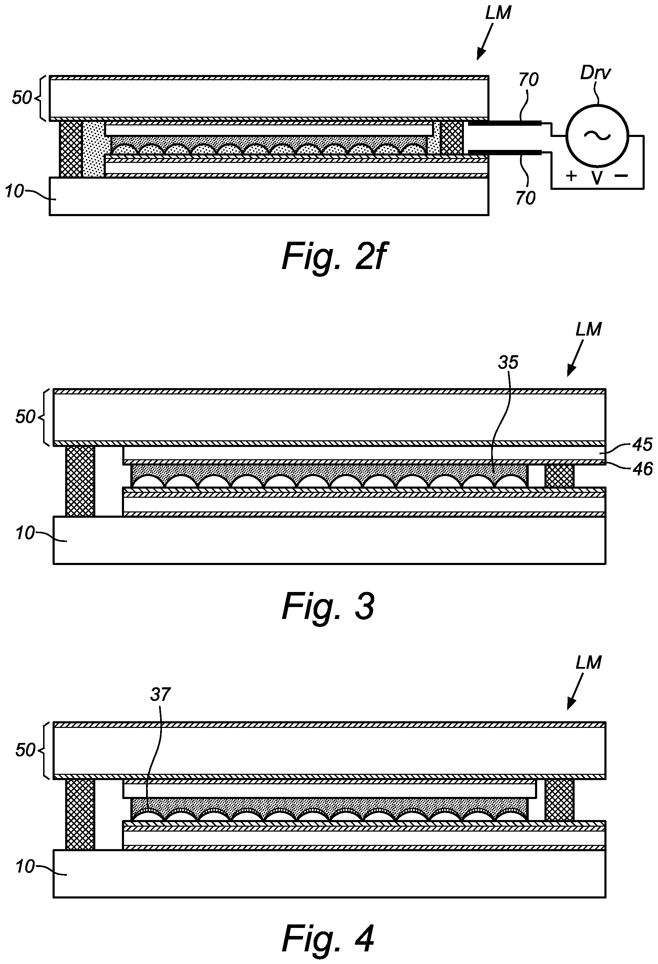

At the viewing side VS of the lenticular means LM there is provided a top plate 50. Such top plate 50 is generally made of glass and stabilizes the switchable cell at the top side. In this embodiment the viewing side of the top plate 50 has been provided with an anti-glare coating 58. Anti-glare coatings as such are well-known to the person skilled in the art. Such coating may be provided by a coating process or, alternatively, by laminating the glass plate with an anti-glare foil. Furthermore, the opposite side of the top plate 50 has been provided with a second transparent electrode layer 56 (which may also comprise ITO material just like the first electrode layer 26). Alternatively, the second transparent electrode layer 56 may be provided on a different location in the stack, which will be further explained with reference to Fig. 3. Just like the base plate 10 the top plate 50 may also comprise glass with a thickness of 0.4 mm or 0.7 mm.

The stack-up of the lenticular means in Fig. 1 further comprises an replica alignment foil 40. This replica alignment foil 40 comprises a sub-stack of different layers. The basis of the sub-stack is a transparent carrier foil 45. On a front-side of the replica alignment foil 45 there is provided a further pressure-sensitive adhesive layer 44 (PSA), which may have a thickness of 25µm for example. On a back-side of the foil 45 there is provided a lenticular sheet 35. Such lenticular sheet 35 is also being referred to as replica. The replica 35 has a profiled surface PSF at a lenticular side LS thereof, which effectively forms lenticular elements 36. In this particular embodiment these lenticular elements 36 are replicated negative lens shapes with a size of 200µm, but it may have other dimensions in case of other panel sizes or other optical requirements of the display apparatus. However, as will be appreciated by the person skilled in the art, the replica 35 may also form positive lenses, as long as this is properly taken into account when choosing the switching values of the refractive index of the electro-optic material 30.

The replica alignment foil 45 may comprise material such as TAC/CTA and may have a thickness between 100µm and 200µm. A distinct advantage of the sub-stack of this replica alignment foil 40 is that it may be made in a reel-to-reel process, using existing coating, spraying, and gluing techniques. There are no hard optical polarization requirements for the replica alignment foil 45.

The stack-up of the lenticular means in Fig. 1 further comprises a layer of electro-optic material 30 provided with a first side S1 thereof to the lenticular side LS of the replica 35, and abutting with a second side S2 thereof to the orientation layer 27. In an embodiment this electro-optic material 30 may be a birefringement liquid crystal (LC) fluid for example. The person skilled in the art will appreciate that the refraction index of such LC must be switchable between a value which matches the refraction index of the replica 35, and another value which differs from such value, such that a lens effect is created by the combination of the electro-optic material 30 and the replica 35.

The lenticular means LM in Fig. 1 constitutes a very advantageous embodiment, because one orientation layer has been dispensed with. Conventionally, in case of a liquid crystal display the liquid crystal material is embedded between two orientation layers. However, the inventors have discovered that one such layer may be dispensed with, namely the one at the replica side (first side S1). Instead of providing such layer on the replica, which is a rather cumbersome and complex process step, the replica 35 itself may be modified such that it takes over the function of the orientation layer. To this end, the replica 35 may be rubbed in the same manner as would have been done in case of an orientation layer. The inventors have discovered that this does not negatively affect the operation of the lenticular means LM.

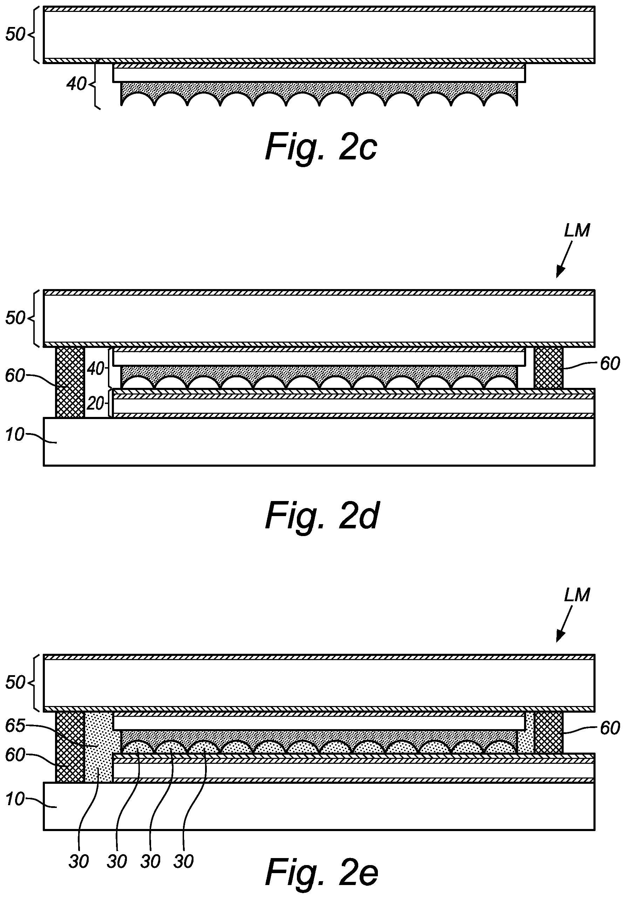

Figs. 2a to 2f show different stages in a manufacturing method of the apparatus of Fig. 1. Fig. 2a discloses a stage, wherein the optical alignment foil 20 has been formed. The optical alignment foil 20 is provided on the base plate 10. This may be done with a lamination process for example. Furthermore, in this stage the orientation layer 27 may be rubbed. Fig. 2b discloses a stage, wherein the replica alignment foil 40 is created. The (negative) lens shapes are replicated on a back-side of the carrier foil 45. Fig. 2c discloses a stage, wherein the replica alignment foil 40 is provided on a back-side of the top plate 50 (on the second electrode layer made of ITO). This may be done by a lamination process for example. Fig. 2d discloses a stage, wherein the switchable cell is created by coupling the stacks of Fig. 2b and 2c together. In this coupling process edge seals 60 are provided as illustrated in Fig. 2d. The edge seals effectively define the space for the liquid crystal fluid to be provided in a later stage. The edge seals 60 may comprise an adhesive layer such as PHOTOLEC™ A-784-60 from the firm Sekisui. Fig. 2e discloses a stage, wherein the switchable cell is filled with the electro-optic material 30, such as liquid-crystal fluid. All spaces between the lenticular sheet 35 and the orientation layer 27 are filled with the LC-fluid. In this process an all-around cavity 65 is also filled with the LC-fluid. In the stage of Fig. 2f driver circuitry Drv is provided and connected to the respective electrode layers 26, 56 via electrical connections 70. The driver circuitry Drv is configured for providing the respective potential for switching the refractive index of the electro-optic material 30.

Fig. 3 shows a stack-up for an autostereoscopic display apparatus in accordance with another embodiment of the invention. As mentioned in the description of Fig. 2c, the second transparent electrode layer 46 may also be provided in a different location of the stack, namely between the respective foil 45 of the replica alignment foil 40 and the replica (lenticular sheet) 35. This provides a cheaper solution than the one in Fig. 2c, because the second transparent electrode layer 46 may now be process and applied in a reel-to-reel process as well. Furthermore, both foils 25, 45 may now be routed to the edge (edge on the right of Fig. 3) of the cell for being connected to the driver circuitry Drv.

Fig. 4 shows a stack-up for an autostereoscopic display apparatus in accordance with another embodiment of the invention. As mentioned in description of Fig. 2b, the embodiment disclosed in Figs. 1 to 3 constitutes a special embodiment, wherein one orientation layer has been dispensed with and the replica 35 has been modified such that it takes over the function of said orientation layer. Fig. 4, shows a stack in which a second orientation layer 37 has been provided in between the replica 35 and the electro-optic layer 30. This embodiment has the advantage that the requirements for the replica material 35 are less stringent, i.e. in the embodiment of Figs. 1 to 3 the replica material must be selected, which can be rubbed.

In this description an example of a method of manufacturing a display apparatus in accordance with the invention is disclosed. It must be noted that many variations are possible in such method and that all such methods falls within the scope of the invention as claimed. At this stage it is explicitly noted that it is also possible to first make a sub-stack excluding the base plate (i.e. glass) and top plate (i.e. glass), using R2R processing, whereafter the stack is cut and the respective plates are added.

The invention may be applied in various applications. The invention may be advantageously applied in electronic devices in the application areas of hand-held devices (such as smart phones, PDA's, laptops, tablet PC's), medical imaging, virtual reality, games and CAD fields.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage.

## Claims

1. Lenticular means (LM) for an autostereoscopic display apparatus comprising a display panel for providing a display output composed of pixels in an array, wherein the lenticular means (LM) are arranged at a display side of the display panel, the lenticular means (LM) comprising:
- a lenticular sheet (35) comprising a profiled surface (PSF) at a lenticular side (LS) thereof, the profiled surface (PSF) defining an array of lenticular elements (36) for directing the outputs from respective groups of said pixels in mutually different directions so as to enable a stereoscopic image to be perceived, wherein the lenticular sheet (35) has a first refractive index;
- an electro-optic material (30) comprising functional molecules, the electro-optic material (30) having a second refractive index and being arranged with a first side (S1) at the lenticular side (LS) on the profiled surface (PSF) of the lenticular sheet (35), wherein the second refractive index of the electro-optic material (30) is switchable by selective application of an electrical potential (V) thereto between a first value, whereby the second refractive index of the electro-optic material (30) is substantially the same as that of the lenticular sheet (35), and a second value, whereby the refractive index of the electro-optic material is different from the first refractive index, and
- a first orientation layer (27) abutting the electro-optic material (30) at a second side (S2) for forcing an orientation of the functional molecules near the interface between the electro-optic material (30) and the first orientation layer (27), the second side (S2) facing away from the lenticular sheet (35),
**characterized in that** the lenticular means (LM) further comprises a first transparent carrier foil (25) being suitable for reel-to-reel processing, wherein a first one selected from a group of: the lenticular sheet (35) and the first orientation layer (27), is provided on the first transparent carrier foil (25)
and **in that** the lenticular means (LM) further comprises a second transparent carrier foil (45) being suitable for reel-to-reel processing, wherein a different one selected from the group of: the lenticular sheet (35) and the first orientation layer (27), is provided on the second transparent carrier foil (45).

2. The lenticular means as claimed in claim 1, wherein the lenticular sheet (35) is directly provided on the electro-optic material (30), and wherein the lenticular side (LS) of the lenticular sheet (35) functions as orientation layer for the electro-optic material (30).

3. The lenticular means as claimed in claim 1, further comprising a second orientation layer (37) in between the lenticular sheet (35) and the electro-optic material (30).

4. The lenticular means of any one of the preceding claims, further comprising a first electrode layer (26) provided at the first side (S1) of the electro-optic material (30), and a second electrode layer (56) provided at the second side (S2) of the electro-optic material (30), wherein the second side (S1) is opposite to the first side (S1), wherein the first electrode layer (26) and the second electrode layer (56) are configured for applying said electrical potential (V).

5. The lenticular means of claim 4, wherein a first one selected from a group of: the first electrode layer (26) and the second electrode layer (56), is provided on the first transparent carrier foil (25).

6. The lenticular means of claim 5, wherein a different one selected from the group of: the first electrode layer (26) and the second electrode layer (56), is provided on the second transparent carrier foil (45).

7. The lenticular means as claimed in any one of the preceding claims, wherein the display panel is either an LED panel, an LCD panel or a plasma panel.

8. An autostereoscopic display apparatus comprising a display panel for providing a display output composed of pixels in an array and further comprising the lenticular means according to any one of the preceding claims, wherein the lenticular means (LM) are arranged at a display side of the display panel.

9. An electronic device comprising the display apparatus as claimed in claim 8.

10. A method of manufacturing lenticular means (LM) for a stereoscopic display apparatus comprising a display panel for providing a display output composed of pixels in an array, wherein the lenticular means (LM) are arranged at a display side of the display panel, the lenticular means (LM) comprising:
- a lenticular sheet (35) comprising a profiled surface (PSF) at a lenticular side (LS) thereof, the profiled surface (PSF) defining an array of lenticular elements (36) for directing the outputs from respective groups of said pixels in mutually different directions so as to enable a stereoscopic image to be perceived, wherein the lenticular sheet (35) has a first refractive index;
- an electro-optic material (30) comprising functional molecules, the electro-optic material (30) having a second refractive index and being arranged with a first side (S1) at the lenticular side (LS) on the profiled surface (PSF) of the lenticular sheet (35), wherein the second refractive index of the electro-optic material (30) is switchable by selective application of an electrical potential (V) thereto between a first value, whereby the second refractive index of the electro-optic material (30) is substantially the same as that of the lenticular sheet (35), and a second value, whereby the refractive index of the electro-optic material is different from the first refractive index, and
- a first orientation layer (27) abutting the electro-optic material (30) at a second side (S2) of the electro-optic material (30) for forcing an orientation of the functional molecules near the interface between the electro-optic material (30) and the first orientation layer (27), the second side (S2) facing away from the lenticular sheet (35),
**characterized in that** the method comprises the steps of:
- providing a first sub-stack of layers (20, 40), comprising a first transparent carrier foil (25) being suitable for reel-to-reel processing, and a first one selected from a group of: the lenticular sheet (35) and the first orientation layer (27), provided on the first transparent carrier foil (25), and
- adding the first sub-stack of layers (20, 40) to an intermediate layer stack of the lenticular means (LM), and
- providing a second sub-stack of layers (40, 20), comprising a second transparent carrier foil (45) being suitable for reel-to-reel processing, and a different one selected from the group of: the lenticular sheet (35) and the first orientation layer (27), provided on the second transparent carrier foil (45), and
- adding the second sub-stack of layers (40, 20) to the intermediate layer stack of the lenticular means (LM).

11. The method as claimed in claim 10, wherein the forming of the first sub-stack of layers (20, 40) is done in a reel-to-reel process.

12. The method as claimed in any one of claims 10 to 11, wherein the forming of the second sub-stack of layers (40, 20) is done in a reel-to-reel process.

13. The method as claimed in any one of claims 10 to 12, wherein the adding of the first sub-stack of layers (20, 40) is done in a reel-to-reel process.

14. The method as claimed in any one of claims 10 to 13, wherein the adding of the second sub-stack of layers (40, 20) is done in a reel-to-reel process.

## Patentansprüche

1. Lentikulare Mittel (LM) für ein autostereoskopisches Anzeigegerät umfassend ein Anzeigefeld zum Bereitstellen einer aus Pixeln in einem Array zusammengesetzten Anzeigeausgabe, wobei die lentikularen Mittel (LM) auf einer Anzeigeseite des Anzeigefelds angeordnet sind, wobei die lentikularen Mittel (LM) umfassen:
- eine lentikulare Lage (35) umfassend eine profilierte Oberfläche (PSF) an einer lentikularen Seite (LS) hiervon, wobei die profilierte Oberfläche (PSF) ein Array aus lentikularen Elementen (36) zum Leiten der Ausgaben von jeweiligen Gruppen der genannten Pixel in zueinander unterschiedlichen Richtungen definiert, um so das Wahrnehmen eines stereoskopischen Bilds zu ermöglichen, wobei die lentikulare Lage (35) einen ersten Brechungsindex hat;
- ein elektrooptisches Material (30) umfassend funktionale Moleküle, wobei das elektrooptische Material (30) einen zweiten Brechungsindex hat und mit der ersten Seite (S1) an der lentikularen Seite (LS) der profilierten Oberfläche (PSF) der lentikularen Lage (35) angeordnet ist, wobei der zweite Brechungsindex des elektrooptischen Materials (30) durch selektives Anlegen eines elektrischen Potentials (V) daran umschaltbar ist zwischen einem ersten Wert, bei dem der zweite Brechungsindex des elektrooptischen Materials (30) im Wesentlichen der gleiche ist wie der der lentikularen Lage (35), und einem zweiten Wert, bei dem sich der Brechungsindex des elektrooptischen Materials von dem ersten Brechungsindex unterscheidet, und
- eine erste Orientierungsschicht (27), die an einer zweiten Seite (S2) an das elektrooptische Material (30) angrenzt, um eine Orientierung der funktionalen Moleküle nahe der Grenzfläche zwischen dem elektrooptischen Material (30) und der ersten Orientierungsschicht (27) zu erzwingen, wobei die zweite Seite (S2) von der lentikularen Lage (35) abgewandt ist,
**dadurch gekennzeichnet, dass** das lentikulare Mittel (LM) weiterhin eine erste transparente Trägerfolie (25) umfasst, die für die Rolle-zu-Rolle-Verarbeitung geeignet ist, wobei eine erste ausgewählt aus einer Gruppe aus: der lentikularen Lage (35) und der ersten Orientierungsschicht (27), auf der ersten transparenten Trägerfolie (25) vorgesehen ist
und dadurch, dass das lentikulare Mittel (LM) weiterhin eine zweite transparente Trägerfolie (45) umfasst, die für die Rolle-zu-Rolle-Verarbeitung geeignet ist, wobei eine andere ausgewählt aus der Gruppe aus: der lentikularen Lage (35) und der ersten Orientierungsschicht (27), auf der zweiten transparenten Trägerfolie (45) vorgesehen ist.

2. Das lentikulare Mittel nach Anspruch 1, wobei die lentikulare Lage (35) direkt auf dem elektrooptischen Material (30) vorgesehen ist, und wobei die lentikulare Seite (LS) der lentikularen Lage (35) als Orientierungsschicht für das elektrooptische Material (30) dient.

3. Das lentikulare Mittel nach Anspruch 1, weiterhin umfassend eine zweite Orientierungsschicht (37) zwischen der lentikularen Lage (35) und dem elektrooptischen Material (30).

4. Das lentikulare Mittel nach einem der vorhergehenden Ansprüche, weiterhin umfassend eine erste Elektrodenschicht (26), die an der ersten Seite (S1) des elektrooptischen Materials (30) vorgesehen ist, und eine zweite Elektrodenschicht (56), die an der zweiten Seite (S2) des elektrooptischen Materials (30) vorgesehen ist, wobei die zweite Seite (S1) der ersten Seite (S1) gegenüberliegt, wobei die erste Elektrodenschicht (26) und die zweite Elektrodenschicht (56) konfiguriert sind, um das genannte elektrische Potential (V) anzulegen.

5. Das lentikulare Mittel nach Anspruch 4, wobei eine erste ausgewählt aus der Gruppe aus: der ersten Elektrodenschicht (26) und der zweiten Elektrodenschicht (56), auf der ersten transparenten Trägerfolie (25) vorgesehen ist.

6. Das lentikulare Mittel nach Anspruch 5, wobei eine andere ausgewählt aus der Gruppe aus: der ersten Elektrodenschicht (26) und der zweiten Elektrodenschicht (56), auf der zweiten transparenten Trägerfolie (45) vorgesehen ist.

7. Das lentikulare Mittel nach einem der vorhergehenden Ansprüche, wobei das Anzeigefeld entweder ein LED-Feld, ein LCD-Feld oder ein Plasma-Feld ist.

8. Ein autostereoskopisches Anzeigegerät umfassend ein Anzeigefeld zum Bereitstellen einer aus Pixeln in einem Array zusammengesetzten Anzeigeausgabe und weiterhin umfassend das lentikulare Mittel nach einem der vorhergehenden Ansprüche, wobei die lentikularen Mittel (LM) auf einer Anzeigeseite des Anzeigefelds angeordnet sind.

9. Eine elektronische Vorrichtung umfassend das Anzeigegerät nach Anspruch 8.

10. Ein Verfahren zur Herstellung von lentikularen Mitteln (LM) für ein stereoskopisches Anzeigegerät umfassend ein Anzeigefeld zum Bereitstellen einer aus Pixeln in einem Array zusammengesetzten Anzeigeausgabe, wobei die lentikularen Mittel (LM) auf einer Anzeigeseite des Anzeigefelds angeordnet sind, wobei die lentikularen Mittel (LM) umfassen:
- eine lentikulare Lage (35) umfassend eine profilierte Oberfläche (PSF) an einer lentikularen Seite (LS) hiervon, wobei die profilierte Oberfläche (PSF) ein Array aus lentikularen Elementen (36) zum Leiten der Ausgaben von jeweiligen Gruppen der genannten Pixel in zueinander unterschiedlichen Richtungen definiert, um so das Wahrnehmen eines stereoskopischen Bilds zu ermöglichen, wobei die lentikulare Lage (35) einen ersten Brechungsindex hat;
- ein elektrooptisches Material (30) umfassend funktionale Moleküle, wobei das elektrooptische Material (30) einen zweiten Brechungsindex hat und mit der ersten Seite (S1) an der lentikularen Seite (LS) der profilierten Oberfläche (PSF) der lentikularen Lage (35) angeordnet ist, wobei der zweite Brechungsindex des elektrooptischen Materials (30) durch selektives Anlegen eines elektrischen Potentials (V) daran umschaltbar ist zwischen einem ersten Wert, bei dem der zweite Brechungsindex des elektrooptischen Materials (30) im Wesentlichen der gleiche ist wie der der lentikularen Lage (35), und einem zweiten Wert, bei dem sich der Brechungsindex des elektrooptischen Materials von dem ersten Brechungsindex unterscheidet, und
- eine erste Orientierungsschicht (27), die an einer zweiten Seite (S2) des elektrooptischen Materials (30) an das elektrooptische Material (30) angrenzt, um eine Orientierung der funktionalen Moleküle nahe der Grenzfläche zwischen dem elektrooptischen Material (30) und der ersten Orientierungsschicht (27) zu erzwingen, wobei die zweite Seite (S2) von der lentikularen Lage (35) abgewandt ist,
**dadurch gekennzeichnet, dass** das Verfahren die folgenden Schritte umfasst:
- Bereitstellen eines ersten Teilstapels von Schichten (20, 40), umfassend eine erste transparente Trägerfolie (25), die für die Rolle-zu-Rolle-Verarbeitung geeignet ist, und eine erste ausgewählt aus einer Gruppe aus: der lentikularen Lage (35) und der ersten Orientierungsschicht (27), vorgesehen auf der ersten transparenten Trägerfolie (25), und
- Hinzufügen des ersten Teilstapels von Schichten (20, 40) zu einem Zwischenschichtstapel des lentikularen Mittels (LM), und
- Bereitstellen eines zweiten Teilstapels von Schichten (40, 20), umfassend eine zweite transparente Trägerfolie (45), die für die Rolle-zu-Rolle-Verarbeitung geeignet ist, und eine andere ausgewählt aus der Gruppe aus: der lentikularen Lage (35) und der ersten Orientierungsschicht (27), vorgesehen auf der zweiten transparenten Trägerfolie (45), und
- Hinzufügen des zweiten Teilstapels von Schichten (40, 20) zu dem Zwischenschichtstapel des lentikularen Mittels (LM).

11. Verfahren nach Anspruch 10, wobei das Bilden des ersten Teilstapels von Schichten (20, 40) in einem Rolle-zu-Rolle-Prozess erfolgt.

12. Verfahren nach einem der Ansprüche 10 bis 11, wobei das Bilden des zweiten Teilstapels von Schichten (40, 20) in einem Rolle-zu-Rolle-Prozess erfolgt.

13. Verfahren nach einem der Ansprüche 10 bis 12, wobei das Hinzufügen des ersten Teilstapels von Schichten (20, 40) in einem Rolle-zu-Rolle-Prozess erfolgt.

14. Verfahren nach einem der Ansprüche 10 bis 13, wobei das Hinzufügen des zweiten Teilstapels von Schichten (40, 20) in einem Rolle-zu-Rolle-Prozess erfolgt.

## Revendications

1. Un moyens lenticulaires (LM) pour un appareil d'affichage autostéréoscopique comprenant un écran d'affichage pour fournir une sortie d'affichage composée de pixels dans un réseau, dans lesquels les moyens lenticulaires (LM) sont agencés sur un côté affichage de l'écran d'affichage, les moyens lenticulaires (LM) comprenant :
- une feuille lenticulaire (35) comprenant une surface profilée (PSF) au niveau d'un côté lenticulaire (LS) de celle-ci, la surface profilée (PSF) définissant un réseau d'éléments lenticulaires (36) pour diriger les sorties de groupes respectifs desdits pixels dans des directions mutuellement différentes de manière à permettre à une image stéréoscopique d'être perçue, dans lesquels la feuille lenticulaire (35) a un premier indice de réfraction ;
- un matériau électro-optique (30) comprenant des molécules fonctionnelles, le matériau électro-optique (30) ayant un second indice de réfraction et étant agencé avec un premier côté (S1) au niveau du côté lenticulaire (LS) sur la surface profilée (PSF) de la feuille lenticulaire (35), dans lesquels le second indice de réfraction du matériau électro-optique (30) peut être commuté par une application sélective d'un potentiel électrique (V) sur celui-ci entre une première valeur, moyennant quoi le second indice de réfraction du matériau électro-optique (30) est sensiblement le même que celui de la feuille lenticulaire (35), et une seconde valeur, moyennant quoi l'indice de réfraction du matériau électro-optique est différent du premier indice de réfraction, et
- une première couche d'orientation (27) en buttée contre le matériau électro-optique (30) au niveau d'un second côté (S2) pour forcer une orientation des molécules fonctionnelles à proximité de l'interface entre le matériau électro-optique (30) et la première couche d'orientation (27), le second côté (S2) étant orienté à l'opposé de la feuille lenticulaire (35),
**caractérisés en ce que** les moyens lenticulaires (LM) comprennent en outre une première pellicule support transparente (25) étant appropriée pour un traitement bobine à bobine, dans lesquels un premier élément choisi parmi le groupe suivant : la feuille lenticulaire (35) et la première couche d'orientation (27), est fourni sur la première pellicule support transparente (25)
et **en ce que** les moyens lenticulaires (LM) comprennent en outre une seconde pellicule support transparente (45) étant appropriée pour un traitement bobine à bobine, dans lesquels un élément différent choisi parmi le groupe suivant : la feuille lenticulaire (35) et la première couche d'orientation (27), est fourni sur la seconde pellicule support transparente (45).

2. Les moyens lenticulaires selon la revendication 1, dans lesquels la feuille lenticulaire (35) est directement fournie sur le matériau électro-optique (30), et des lesquels le côté lenticulaire (LS) de la feuille lenticulaire (35) fonctionne en tant que couche d'orientation pour le matériau électro-optique (30).

3. Les moyens lenticulaires selon la revendication 1, comprenant en outre une seconde couche d'orientation (37) entre la feuille lenticulaire (35) et le matériau électro-optique (30).

4. Les moyens lenticulaires selon l'une quelconque des revendications précédentes, comprenant en outre une première couche d'électrode (26) fournie au niveau du premier côté (S1) du matériau électro-optique (30), et une seconde couche d'électrode (56) fournie au niveau du second côté (S2) du matériau électro-optique (30), dans lesquels le second côté (S1) est opposé au premier côté (S1), dans lesquels la première couche d'électrode (26) et la seconde couche d'électrode (56) sont configurées pour appliquer ledit potentiel électrique (V).

5. Les moyens lenticulaires selon la revendication 4, dans lesquels un premier élément choisi parmi le groupe suivant : la première couche d'électrode (26) et la seconde couche d'électrode (56), est fourni sur la première pellicule support transparente (25).

6. Les moyens lenticulaires selon la revendication 5, dans lesquels un élément différent choisi parmi le groupe suivant : la première couche d'électrode (26) et la seconde couche d'électrode (56), est fourni sur la seconde pellicule support transparente (45).

7. Les moyens lenticulaires selon l'une quelconque des revendications précédentes, dans lesquels l'écran d'affichage est soit un écran à DEL, soit un écran LCD, soit un écran à plasma.

8. Un appareil d'affichage autostéréoscopique comprenant un écran d'affichage pour fournir une sortie d'affichage composée de pixels dans un réseau et comprenant en outre les moyens lenticulaires selon l'une quelconque des revendications précédentes, dans lequel les moyens lenticulaires (LM) sont agencés au niveau d'un côté affichage de l'écran d'affichage.

9. Un dispositif électronique comprenant l'appareil d'affichage selon la revendication 8.

10. Un procédé de fabrication de moyens lenticulaires (LM) pour un appareil d'affichage stéréoscopique comprenant un écran d'affichage pour fournir une sortie d'affichage composée de pixels dans un réseau, dans lequel les moyens lenticulaires (LM) sont agencés au niveau d'un côté affichage de l'écran d'affichage, les moyens lenticulaires (LM) comprenant :
- une feuille lenticulaire (35) comprenant une surface profilée (PSF) au niveau d'un côté lenticulaire (LS) de celle-ci, la surface profilée (PSF) définissant un réseau d'éléments lenticulaires (36) pour diriger les sorties de groupes respectifs desdits pixels dans des directions mutuellement différentes se manière à permettre à une image stéréoscopique d'être perçue, dans lequel la feuille lenticulaire (35) a un premier indice de réfraction ;
- un matériau électro-optique (30) comprenant des molécules fonctionnelles, le matériau électro-optique (30) ayant un second indice de réfraction et étant agencé avec un premier côté (S1) au niveau du côté lenticulaire (LS) sur la surface profilée (PSF) de la feuille lenticulaire (35), dans lequel le second indice de réfraction du matériau électro-optique (30) peut être commuté par une application sélective d'un potentiel électrique (V) sur celui-ci entre une première valeur, moyennant quoi le second indice de réfraction du matériau électro-optique (30) est sensiblement le même que celui de la feuille lenticulaire (35), et une seconde valeur, moyennant quoi l'indice de réfraction du matériau électro-optique est différent du premier indice de réfraction, et
- une première couche d'orientation (27) en buttée contre le matériau électro-optique (30) au niveau d'un second côté (S2) du matériau électro-optique (30) pour forcer une orientation des molécules fonctionnelles à proximité de l'interface entre le matériau électro-optique (30) et la première couche d'orientation (27), le second côté (S2) étant orienté à l'opposé de la feuille lenticulaire (35),
**caractérisé en ce que** le procédé comprend les étapes suivantes :
- la fourniture d'une première pile secondaire de couches (20, 40), comprenant une première pellicule support transparente (25) étant appropriée pour un traitement bobine à bobine, et un premier élément choisi parmi le groupe suivant : la feuille lenticulaire (35) et la première couche d'orientation (27), est fourni sur la première pellicule support transparente (25), et
- l'ajout de la première pile secondaire de couches (20, 40) à une pile de couches intermédiaires des moyens lenticulaires (LM), et
- la fourniture d'une seconde pile secondaire de couches (40, 20), comprenant une seconde pellicule support transparente (45) étant appropriée pour un traitement bobine à bobine, dans lequel un élément différent choisi parmi le groupe suivant : la feuille lenticulaire (35) et la première couche d'orientation (27), est fourni sur la seconde pellicule support transparente (45), et
- l'ajout de la seconde pile secondaire de couches (40, 20) à la pile de couches intermédiaires des moyens lenticulaires (LM).

11. Le procédé selon la revendication 10, dans lequel la formation de la première pile secondaire de couches (20, 40) se fait au cours d'un traitement bobine à bobine.

12. Le procédé selon l'une quelconque des revendications 10 et 11, dans lequel la formation de la seconde pile secondaire de couches (40, 20) se fait au cours d'un traitement bobine à bobine.

13. Le procédé selon l'une quelconque des revendications 10 à 12, dans lequel l'ajout de la première pile secondaire de couches (20, 40) se fait au cours d'un traitement bobine à bobine.

14. Le procédé selon l'une quelconque des revendications 10 à 13, dans lequel l'ajout de la seconde pile secondaire de couches (40, 20) se fait au cours d'un traitement bobine à bobine.
